Europäisches Patentamt

European Patent Office

Office européen des brevets

(19)

(11) **EP 1 219 959 A1**

(12) **EUROPÄISCHE PATENTANMELDUNG**

(43) Veröffentlichungstag:
**03.07.2002 Patentblatt 2002/27**

(51) Int Cl.⁷: **G01N 27/403**, G01N 27/416

(21) Anmeldenummer: **01128253.0**

(22) Anmeldetag: **28.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.12.2000 EP 00128586**

(71) Anmelder: **Hamilton Bonaduz AG**
**CH-7402 Bonaduz (CH)**

(72) Erfinder: **Bühler, Hannes Dr.**
**8873Amden (CH)**

(74) Vertreter: **Dey, Michael, Dr. et al**
**Weickmann & Weickmann,**
**Patentanwälte,**
**Postfach 86 08 20**
**81635 München (DE)**

(54) **Elektrochemisches Messystem mit zwei Referenzelektroden unterschiedlicher Potentialstabilität zur Kontrolle des Salzgehalts im gemeinsamen Referenzelektrolyten**

(57)      Die Erfindung betrifft ein elektrochemisches Messsystem, das zur Erfassung des pH-Werts eingesetzt werden kann und neben der Messelektrode (in der Figur zentral angeordnet) zwei Referenzelektroden (24,32) umfasst, die eine unterschiedliche Potentialstabilität aufweisen. Jede Referenzelektrode umfasst ein Ableitelement (26a,26b), einen Ableitelektrolyten (28a, 28b) und einen porösen Stopfen (30a,30b). Beiden Referenzelektroden gemeinsam ist der Referenzelektrolyt (12) sowie die Flüssigkeitsverbindung (20) zum Messmedium. Die Referenzelektrode mit der höheren Potentialstabilität wird zur Bestimmung des Messwerts im Messmedium verwendet, während die Referenzelektrode mit der niedrigeren Potentialstabilität zur Bestimmung der Salzkonzentration im gemeinsamen Referenzelektolyten dient. Diese lässt sich aus dem Potentialunterschied zwischen den Referenzelektroden berechnen. Die zweite Referenzelektrode kann im Unterschied zur Figur auch lediglich aus einem Ag/AgCl Draht bestehen. Bei Erreichen eine Grenzwerts für die Potentialdifferenz wird eine Meldung ausgelöst.

Figur 3:

EP 1 219 959 A1

**Beschreibung**

Die Erfindung betrifft ein elektrochemisches Messsystem, das typischerweise zur Erfassung des pH-Werts eingesetzt werden kann und zwei Referenzelektroden umfasst, die eine definierte, unterschiedliche Potenzialstabilität aufweisen, wobei der Salzgehalt einer der Referenzelektroden kontrolliert wird.

Die pH-Messung ist eine der wichtigsten analytischen Methoden. Der pH-Wert wird vorwiegend mit elektrochemischen Sensoren bestimmt, die aus einer pH-sensitiven Glaselektrode und einer Referenzelektrode bestehen. Das Potenzial zwischen den beiden Elektroden ist proportional zum pH-Wert der Messlösung. Daneben sind andere potentiometrische Sensoren bekannt, wie etwa Redoxelektroden oder ionensensitive Elektroden.

Meist werden sogenannte Einstabmessketten eingesetzt, bei denen die Referenzelektrode konzentrisch um die innere Messelektrode angeordnet ist. Die Flüssigkeitsverbindung, auch Liquid Junction genannt, sorgt für einen elektrolytischen Kontakt zwischen dem Referenzelektrolyten im Innern der Referenzelektrode und dem Messmedium. Als Referenzelektrolyt wird üblicherweise eine konzentrierte wässrige Lösung von Kaliumchlorid verwendet.

An jeder Flüssigkeitsverbindung findet ein Stoffaustausch statt, der zu Konzentrationsänderungen im Referenzelektrolyten und somit zu unerwünschten Potenzialverschiebungen führen kann. Der Stoffaustausch ist im Wesentlichen die Folge von drei Vorgängen. Bei unterschiedlichen Stoffkonzentrationen entstehen Diffusionsvorgänge, da sich alle Stoffkonzentrationen ausgleichen wollen. Das dadurch entstehende Diffusionspotenzial wird bei elektrochemischen Messsystemen stets mitgemessen. Bei neuen Elektroden ist es klein und führt zu keinem oder nur einem vernachlässigbar kleinen Messfehler.

Bei einem unterschiedlichen Druck auf beiden Seiten der Flüssigkeitsverbindung entsteht ein zusätzlicher konvektiver Stofftransport. Die dritte Ursache für den Stofftransport ist die Migration. Diese tritt auf, wenn die elektrischen Potenziale auf beiden Seiten der Flüssigkeitsverbindung unterschiedlich sind, wobei die Migration nur elektrisch geladene Teilchen betrifft.

Die Flüssigkeitsverbindung kann aus verschiedenen Materialien hergestellt sein. Bei den meisten elektrochemischen Referenzelektroden dient ein poröser Keramikstopfen als Flüssigkeitsverbindung. Dieser Stopfen wird auch als Diaphragma bezeichnet und ist im äußeren Schaft der Elektrode eingeschmolzen, eingepresst oder eingeklebt. Es existieren aber auch verschiedene andere Ausbildungen des Diaphragmas, wie z.B. Glasschliffe, Baumwollfasern, verzwirnte Metallfäden, poröse Kunststoffstopfen, Stifte aus Holz etc. Ganz allgemein können feinporige Stoffe für die Flüssigkeitsverbindung eingesetzt werden.

Das US Patent 4,959,138 beschreibt eine neuartige Liquid Junction, die aus einem einzelnen Loch besteht. Der flüssige oder gelförmige Referenzelektrolyt klassischer Referenzelektroden muss daher durch einen polymeren Elektrolyten ersetzt werden, um das Ausfließen des Elektrolyten zu verhindern. Hierzu werden wässrige oder teilwässrige Hydrogele eingesetzt. Bei dieser neuartigen Referenzelektrode besteht ein direkter Kontakt zwischen der Messlösung und dem Polymerelektrolyten.

Das Ableitelement der Referenzelektrode besteht meist aus einem mit Silberchlorid beschichteten Silberdraht. Bei industriellen Elektroden ist das Ableitelement oft in Form einer Patrone angeordnet, wobei Silberdraht und Silberchlorid sich in einem Röhrchen befinden, welches mit einem porösen Stopfen abgedichtet ist. Solche Patronen erlauben höhere Einsatztemperaturen. Andere Ableitsysteme wie Quecksilber / Kalomel oder Thalliumamalgam / Thalliumchlorid sind aufgrund ihrer Giftigkeit nahezu vom Markt verschwunden.

Die pH-Einstabmesskette oder einfach die pH-Elektrode muss mit pH-Pufferlösungen kalibriert werden. Meist werden 2 unterschiedliche Pufferlösungen verwendet, um den Nullpunkt und die Steigung der Kalibrationsgerade festzulegen. Diese Werte bleiben über die Zeit nicht konstant, was eine periodische Rekalibrierung erfordert. Die Verschiebung dieser Werte ist von sehr vielen Faktoren abhängig, z.B. von der Messtemperatur, von den Druckverhältnissen im Reaktor, von der chemischen Zusammensetzung des Messgutes, vom Aufbau der pH-Elektrode etc. All dies verhindert eine allgemein gültige Festlegung von sinnvollen Kalibrationsintervallen. Diese müssen für die jeweilige Anwendung ermittelt werden, was kostspielig und unerwünscht ist. Auch wenn die Kalibrationsintervalle festgelegt sind, fallen periodische Wartungskosten an.

Sowohl die pH-Glaselektrode als auch die Referenzelektrode sind für die Verschiebung der Kalibrationswerte verantwortlich. In den letzten Jahren sind bei der pH-Glaselektrode große Fortschritte erzielt worden. Die Stabilität des Nullpunktes und der Steigung ist sehr gut in über 95 % der Anwendungen. Einzig bei Anwendungen in heißen Laugen und bei Anwesenheit von Flusssäure verschieben sich die Kalibrationswerte stärker. In den überwiegenden Fällen ist die Referenzelektrode verantwortlich für die Verschiebung der Kalibrationswerte. Diese Verschiebungen basieren im Wesentlichen auf 2 Tatsachen:

a) Es werden heute vorzugsweise Referenzelektroden ohne Nachfüllöffnung eingesetzt, um die Wartung zu vereinfachen. Über das Diaphragma verliert die Referenzelektrode wie oben beschrieben laufend Kaliumchlorid durch Diffusion, Konvektion und Migration. Die Salzkonzentration des Referenzelektrolyten nimmt ab, was gemäss dem Nernst'schen Gesetz eine Potenzialverschiebung verursacht. Bei einer Abnahme der Salzkonzentration um einen Faktor 10 verschiebt sich der Nullpunkt um 1 pH-Einheit. Die Abnahme der Salzkonzentration führt zusätzlich zu größeren Diffusionspotenzialen am Diaphragma, was wiederum Messfehler zur Folge hat. Diffusionspotenziale sind zwar immer vorhanden. Bei neuen Elektroden mit einem Referenzelektrolyten hoher Konzentration sind sie jedoch klein. Erst bei abnehmender Salzkonzentration des Referenzelektrolyten nehmen die Diffusionspotenziale zu und erreichen nicht mehr tolerierbare Werte. Die Diffusionspotenziale in Abhängigkeit der Konzentration des Referenzelektrolyten können auf einfache Weise berechnet werden. So beträgt das Diffusionspotenzial in 0,1 molarer Salzsäure 0,06 pH-Einheiten, wenn der Referenzelektrolyt eine 3 molare KCl-Lösung enthält und 0,27 pH-Einheiten, wenn der Referenzelektrolyt eine 0,3 molare KCl-Lösung enthält.

b) Die Veränderungen der Kalibrationswerte können auch durch ein verschmutztes Diaphragma hervorgerufen werden. Diese Verschmutzung kann große zusätzliche Potenziale resp. Messfehler verursachen. Bei den modernen pH-Elektroden mit offener Liquid Junction gemäß US Patent 4,959,138 entfallen diese Probleme größtenteils.

Bei den heute verbreiteten pH-Elektroden mit offener Flüssigkeitsverbindung ist der Salzverlust der Referenzelektrode der Hauptgrund für die Notwendigkeit einer Nachkalibrierung. Durch eine Verlängerung der Diffusionsstrecke zwischen Liquid Junction und Ableitelement wird die Potenzialstabilität des Ableitelementes verbessert. In der internationalen Patentanmeldung PCT WO 96/34277 ist der Referenzelektrolyt schraubenförmig innerhalb des Elektrodenschaftes angeordnet, was eine große Distanz zwischen Liquid Junction und Ableitelement bewirkt. Während dadurch eine gute Potenzialstabilität erreicht wird, nimmt hingegen die Salzkonzentration bei der Liquid Junction rasch ab, was zu großen Diffusionpotenzialen und Messfehlern führt. Die oft eingesetzten pH-Elektroden mit Elektrolytbrücke basieren auf der gleichen Idee wie PCT WO 96/34277. Nachteilig ist auch hier die unkontrollierte Abnahme des Salzkonzentration in der äußeren Elektrolytkammer. Dies führt unter Umständen zwar zu guten Kalibrationswerten in pH-Pufferlösungen, jedoch kann es in der Messprobe zu erheblichen Messfehlern durch große Diffusionspotenziale kommen. Der Anwender nimmt diese Qualitätsmängel nicht wahr und interpretiert die Messergebnisse falsch, da ihm bei der Kalibration eine falsche Sicherheit vermittelt wurde.

DE 19626277 A1 beschreibt eine Messeinrichtung zur elektrochemischen Potentialmessung mit zwei räumlich voneinander getrennten Bezugselektroden. Die Messvorrichtung weist zwei parallele Referenzelektroden auf, die unabhängig voneinander sind. Durch den Einsatz einer zweiten Bezugselektrode, die sich in Art und Aufbau von der ersten unterscheiden kann, werden bei einer solchen Sonde zwei unabhängige Messwerte von den Referenzelektroden erhalten. Bei Auftreten einer Differenz bzw. Differenzänderung zwischen den beiden Messwerten erfolgt eine Fehlermeldung. Dabei kann nicht festgestellt werden, welche der beiden Referenzelektroden korrekt ist und welche falsche Werte liefert. Es erfolgt somit keine Kontrolle der Stabilität einer Referenzelektrode, sondern es werden zwei Messwerte von zwei unabhängigen Referenzelektroden erhalten, wodurch lediglich das Auftreten von Messwertfehlern und somit die Notwendigkeit eines Austausches der Messeinrichtung angezeigt werden kann. Ein weiteres Problem bei einem solchen Aufbau besteht darin, dass Referenzelektroden durch Diffusion Salz, beispielsweise KCl, verlieren. Aufgrund dieser Diffusion verschiebt sich der Nullpunkt der Referenzelektroden. Da es praktisch nicht möglich ist, zwei Referenzelektroden herzustellen, welche eine identische Salzdiffusion aufweisen, entsteht nach einer bestimmten Zeit immer eine Potentialdifferenz zwischen den beiden Referenzelektroden. Diaphragmaverschmutzungen, welche eines der größten Probleme bei der pH-Messung darstellen, können bei einer solchen Anordnung daher nicht eindeutig festgestellt werden, da ohnehin Potentialverschiebungen entstehen. Die auftretende Potentialdifferenz kann bei einer Messvorrichtung gemäß DE 19626277 A1 nicht eindeutig zugeordnet werden und es ist keine Interpretation möglich.
Weiterhin erfordert die Messeinrichtung gemäß DE 19626277 A1 drei konzentrische Glasrohre, was auch konstruktive Probleme verursacht.
US 5,766,432 (Dunn et al.) beschreibt eine Messvorrichtung, die insbesondere zur Messung des pH-Werts von Gewebe geeignet ist. Dabei wird eine pH-Elektrode in das Gewebe eingeführt und eine Vielzahl von parallel geschalteten Haut-Referenzelektroden eingesetzt. Durch die Verwendung mehrerer paralleler Haut-Referenzelektroden sollen Probleme jedweder Art, die an den Referenzelektroden auftreten können, erkannt werden. Der Mittelwert der Referenzelektroden wird bestimmt und Referenzelektroden, deren Potential zu weit vom Mittelwert liegen, werden ausgesondert. Auch bei dieser Anordnung kann nicht bestimmt werden, welche Referenzelektrode den korrekten Wert anzeigt. Falls beispielsweise bei der Mehrheit der Referenzelektroden gleiche oder ähnliche Probleme, beispielsweise ein ähnlicher Drift auftritt, ist auch der berechnete Mittelwert falsch. Mit der in US 5,766,432 beschriebenen Vorgehensweise können somit lediglich Ausreißer festgestellt werden. Eine Kontrolle des Referenzelektrolyten ist nicht möglich.
US 4,461,998 (Kater) beschreibt eine Vorrichtung zur Messung von Ionen und insbesondere zur Bestimmung von Blut-Parametern mittels Elektroden. Dabei werden zwei unterschiedliche Referenzelektroden, beispielsweise eine klassische Referenzelektrode und eine Ionen-selektive Referenzelektrode abwechselnd eingesetzt. Eine gegenseitige Kontrolle oder eine Kontrolle der Stabilität einer Referenzelektrode findet nicht statt, vielmehr wird periodisch kalibriert.
Die Offenlegungsschrift DE 3510868 beschreibt ein pH-Messsystem mit einer separaten Referenzelektrode mit Brückenelektrolyt. Im Brückenelektrolyten befindet sich eine pH-Glaselektrode zur Kontrolle des pH-Werts des Brückenelektrolyten. Dieser komplizierte Aufbau mit einer hochohmigen Kontrollelektrode erlaubt nur die Bestimmung des pH-Werts des Brückenelektrolyten. Änderungen des Salzgehaltes des Brückelektrolyten werden nicht erfasst. Es ist aber aus der Henderson Gleichung bekannt, dass vorwiegend die Salzkonzentration des Referenzelektrolyten die Größe der Diffusionspotenziale und daher den Messfehler bestimmt. Nach der Henderson Gleichung berechnete Diffusionspotenziale für eine pH-Kontrolle in 0,1 molarer Salzsäure sind z.B. wie folgt:

| Referenzelektrolyt | 3 M KCl, pH 7 | Diffusionspotential = 0.06 pH |
|---|---|---|
| Referenzelektrolyt | 3 M KCl, pH 2 | Diffusionspotential = 0.06 pH |
| Referenzelektrolyt | 3 M KCl, pH 12 | Diffusionspotential = 0.06 pH |
| Referenzelektrolyt | 0.3 M KCl, pH 7 | Diffusionspotential = 0.27 pH |
| Referenzelektrolyt | 0.3 M KCl, pH 2 | Diffusionspotential = 0.26 pH |
| Referenzelektrolyt | 0.3 M KCl, pH 12 | Diffusionspotential = 0.28 pH |

Entscheidend für das Diffusionspotential ist also die Salzkonzentration und nicht der pH-Wert.

Ein weiterer Nachteil des in DE 35 10 868 beschriebenen Systems besteht darin, dass der komplizierte Aufbau des Messsystems mit 2 bzw. 3 hochohmigen Elektroden den Aufbau einer pH-Einstabmesskette mit Durchmesser von 12 mm unmöglich macht. Die meisten heutigen pH-Messstellen verlangen aber gerade solche Elektroden.

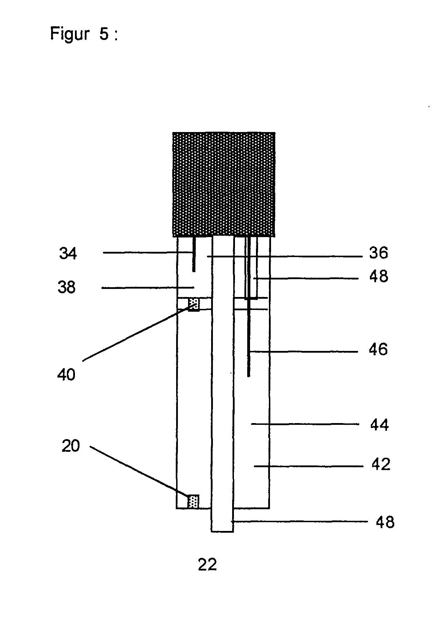

Der vorliegenden Erfindung lag daher die Aufgabe zugrunde, eine wartungsfreie pH-Elektrode zu realisieren, welche eine einfache Kontrolle des Salzgehaltes des äußeren Referenzelektrolyten ermöglicht. Diese Aufgabe wird erfindungsgemäß gelöst durch ein elektrochemisches Messsystem, umfassend eine Messelektrode und mindestens zwei Referenzelektroden, die jeweils eine unterschiedliche Potenzialstabilität aufweisen. Der erfindungsgemäße Aufbau ermöglicht es, dass der Salzgehalt, insbesondere der KCl-Gehalt des äußeren Referenzelektrolyten, durch eine weitere Referenzelektrode (Referenzelektrode 2) gemessen wird. Auf diese Weise kann eine stabile Referenzelektrode (Referenzelektrode 1) hergestellt und gleichzeitig die Stabilität dieser Referenzelektrode kontrolliert bzw. überwacht werden. Um eine solche Kontrolle der stabilen Referenzelektrode zu erzielen, werden im erfindungsgemäßen Messsystem zwei Referenzelektroden in Serie geschaltet, d.h. Referenzelektrode 2 (zur Kontrolle des Salzgehaltes des äußeren Referenzelektrolyten 2), welche in Kontakt mit dem Messmedium steht, wird verbunden mit der stabilen Referenzelektrode 1. Eine innere Flüssigkeitsverbindung stellt den elektrolytischen Kontakt her zwischen Referenzelektrolyt 1 und 2. Eine schematische Darstellung der erfindungsgemäßen seriellen Anordnung ist in Abbildung 5 gezeigt.

Die erfindungsgemäße Anordnung ermöglicht es, die Salzkonzentration, insbesondere die ChloridKonzentration des Referenzelektrolyten 2 ständig zu bestimmen bzw. zu überwachen. Im Gegensatz zu Anordnungen des Standes der Technik (vgl. beispielsweise DE 3510868) wird somit erfindungsgemäß der Salzgehalt eines Referenzelektrolyten und nicht der pH-Wert eine Brückenelektrolyts bestimmt.

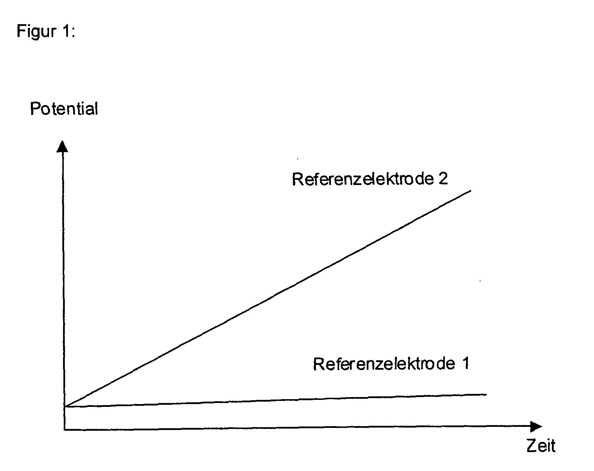

Das Prinzip der Erfindung ist wie folgt: Eine Referenzelektrode 1 wird zur Bestimmung des Meßwertes, insbesondere zur Bestimmung des pH-Wertes eines Mediums genutzt. Die Stabilität dieser Referenzelektrode 1 ist hoch (vgl. auch Figur 1). Der Salzgehalt des Referenzelektrolyten der Referenzelektrode 1 ist (nahezu) konstant. Dies ist Voraussetzung für ein konstantes Potential. Mit der Referenzelektrode 1 wird eine Referenzelektrode 2 in Serie geschaltet. Die in Serie geschaltete Referenzelektrode 2 ist weniger stabil (vgl. Figur 1). Aus der Potenzialdifferenz zwischen den Referenzelektroden 1 und 2 kann erfindungsgemäß der Salzgehalt des Referenzelektrolyten 2 berechnet werden. Zur Vereinfachung der Rechnung kann dabei oftmals davon ausgegangen werden, dass der Salzgehalt des Referenzelektrolyten 1 konstant ist. Der Salzgehalt des Referenzelektrolyten 2 bestimmt vorwiegend die Größe der Diffusionspotenziale und somit der Messfehler am äußeren Flüssigkeitsübergang. Falls der Salzgehalt des äußeren Referenzelektrolyten 2 unter eine vorbestimmte Konzentration fällt, kann vorgesehen werden, dass die Elektrode ausgewechselt werden soll.

Weiterhin ist es möglich, aus der Potenzialdifferenz eine kleine Verschiebung der Referenzelektrode 1 zu berechnen (falls die Geraden der Figur 1 klar definiert sind) und zur Rekalibrierung des Nullpunktes zu benutzen. Beispielsweise kann die Potenzialverschiebung der Referenzelektrode 1 stets 50mal kleiner sein als die Potenzialdifferenz zwischen Referenzelektrode 1 und 2. Durch diese Werte werden die Geraden der Figur 1 klar definiert und eine quantitative Korrektur möglich.

Bevorzugt handelt es sich bei den Referenzelektroden um niederohmige Elektroden, die einen Widerstand von ≤1 MΩ bei 25 °C, mehr bevorzugt ≤800 kΩ bei 25 °C aufweisen. Vorteilhaft ist die Niederohmigkeit der beiden Referenzelektroden, da sie eine direkte Kompensation des Messsignals zulässt.

Bei dem erfindungsgemäßen elektrochemischen Messsystem handelt es sich bevorzugt um einen elektrochemischen Sensor und insbesondere um einen Sensor zur Messung des pH-Wertes. Die Messelektrode wird so gewählt, dass die gewünschte Eigenschaft der Analytlösung, beispielsweise deren pH-Wert, gemessen werden kann. Bevorzugt handelt es sich bei der Messelektrode um eine Glaselektrode.

Die erfindungsgemäße Doppelreferenz kann aber selbstverständlich auch bei anderen potentiometrischen Sensoren, wie z.B. Redoxelektroden oder ionenselektiven Elektroden, angewendet werden.

Die Kontrolle des Salzgehaltes des Referenzelektrolyten kann ohne Ausbau des erfindungsgemäßen elektrochemischen Messsystems, z.B. einer pH-Elektrode erfolgen. Die Potenzialdifferenz zwischen den beiden Referenzelektroden kann zur Kompensation von Messfehlern genutzt werden. Sie ermöglicht auch eine automatische Aufforderung an den Anwender, die pH-Elektrode zu ersetzen, unabhängig von der Zusammensetzung und Temperatur der Messlösung. Weiter ist die erfindungsgemässe pH-Elektrode einfach und kostengünstig aufgebaut und ermöglicht einen Durchmesser von 12 mm.

Die Potenzialstabilität einer Referenzelektrode mit Gelelektrolyt oder Polymerelektrolyt wird vorwiegend durch die Diffusion von Salzen, z.B. von Kaliumchlorid aus dem Elektrolyten in das Messgut bestimmt. Mit Hilfe der Diffusionsgesetze von Fick kann die Potenzialverschiebung bei Raumtemperatur mit der folgenden Faustregel berechnet werden:

$$t = V * R$$

wobei:

t = Zeit in Monaten für eine Potenzialverschiebung von 6 mV (0.1 pH-Einheit) bei Raumtemperatur, und somit ein Maß für die Potenzialstabilität
V = Elektrolytvolumen in ml
R = Diaphragmawiderstand in kOhm gemessen in 3M KCl

In anderen Worten verschiebt sich der Nullpunkt einer pH-Elektrode bei Raumtemperatur in einem Monat um 0,1 pH-Einheiten bei einer Referenzelektrode mit einem Elektrolytvolumen von 1 ml und einem Diaphragmawiderstand von 1 kOhm.

Der Begriff "Potenzialstabilität", wie hierin verwendet, bezeichnet somit bevorzugt die Potenzialstabilität über eine gewisse Zeitdauer, also die Stabilität des Potenzials in Abhängigkeit oder als Funktion der Zeit.

Der Elektrolyt einer Referenzelektrode kann zusätzlich festes Salz, z.B. festes Kaliumchlorid, z.B. in Form von Pulver, Stangen oder Ringen enthalten. Der Nullpunkt der Referenzelektrode bleibt dann konstant, solange festes Salz (z.B. KCl) anwesend ist. Die Zeit für das Auflösen des festen Salzes kann ebenfalls mit dem Gesetz von Fick hergeleitet werden

$$t = g(Salz) * R * 25$$

wobei:

t = Zeit in Monaten für die vollständige Auflösung des festen Salzes (z.B. Kaliumchlorid) bei Raumtemperatur
g(Salz) = Menge des festen Kaliumchlorids in Gramm und
R = Diaphragmawiderstand in kOhm, gemessen in 3M KCl

Enthält der Elektrolyt z.B. 1 g festes KCl, so bleibt das Potenzial einer Referenzelektrode mit Diaphragmawiderstand von 1 kOhm über eine Zeitdauer von 25 Monaten bei Raumtemperatur konstant.

Das erfindungsgemäße elektrochemische Messsystem, bei dem es sich insbesondere um eine pH-Elektrode handelt, enthält mindestens 2 Referenzelektroden mit unterschiedlicher Potenzialstabilität. Die Potenzialstabilität (angeben z.B. als t, wie oben definiert) der zwei Referenzelektroden unterscheidet sich bevorzugt mindestens um einen Faktor 2, mehr bevorzugt mindestens um einen Faktor 5 und am meisten bevorzugt mindestens um einen Faktor 10. Die Potenzialstabilität kann sich bevorzugt bis zu einem Faktor von 1000 und mehr bevorzugt bis zu einem Faktor von 100 zwischen den beiden Referenzelektroden unterscheiden.

Erfindungsgemäß bevorzugt wird die Referenzelektrode 1 mit der höheren Potenzialstabilität zur Bestimmung des Messwerts im Messmedium verwendet, während die Referenzelektrode 2 mit der niedrigeren Potenzialstabilität zur Bestimmung der Salzkonzentration im Referenzelektrolyten 2 dient.

In einer ersten bevorzugten Ausführungsform wird die unterschiedliche Potentialstabilität der Referenzelektroden dadurch erreicht, dass Referenzelektroden mit unterschiedlich großen Elektrolytvolumen vorgesehen werden. Bevorzugt unterscheiden sich die Elektrolytvolumen der beiden Referenzelektroden um einen Faktor von mindestens 2, mehr bevorzugt mindestens 5 und am meisten bevorzugt mindestens 10 bis zu einem Faktor von bevorzugt höchstens 1000 und mehr bevorzugt höchstens 100. Bei dem Elektrolyten der Referenzelektroden kann es sich um eine Lösung handeln, beispielsweise eine Lösung eines Salzes in einem wässrigen oder organischen Lösungsmittel. Bevorzugt handelt es sich bei dem Elektrolyten der Referenzelektroden jedoch um einen Gelelektrolyten oder Polymerelektrolyten.

In einer weiteren bevorzugten Ausführungsform werden die unterschiedlichen Potenzialstabilitäten der Referenzelektroden dadurch erzielt, dass Referenzelektroden mit unterschiedlich großen Widerständen eingesetzt werden. Im Falle der Verwendung eines Diaphragmas, ist dabei der Referenzelektrodenwiderstand gleich dem Diaphragmawiderstand. Geeignete Diaphragmas sind z.B. poröse oder feinporige Materialien, insbesondere poröse Keramikstopfen, Glasschliffe, Baumwollfasern, synthetische Fasern, Metallfäden, poröse Kunststoffstopfen, Holzstifte etc. Im Fall der Verwendung eines einfachen Loches (vgl. US 4,959,138), bei der ein direkter Kontakt zwischen Messlösung und Referenzelektrolyt besteht, ist der Widerstand der Referenzelektrode der Widerstand der Grenzfläche Messlösung / Referenzelektrolyt. Der Widerstand der beiden Referenzelektroden unterscheidet sich bevorzugt um einen Faktor von mindestens 2, mehr bevorzugt um einen Faktor von mindestens 5 und am meisten bevorzugt um einen Faktor von mindestens 10 und kann sich bevorzugt bis zu einem Faktor von 1000, mehr bevorzugt bis zu einem Faktor von 100 unterscheiden.

Selbstverständlich ist es auch möglich, eine unterschiedliche Potenzialstabilität der Referenzelektroden dadurch zu erzielen, dass sich sowohl das Elektrolytvolumen als auch der Widerstand der Referenzelektroden unterscheidet.

Die Referenzelektrolyte können unterschiedliche Salzkonzentrationen aufweisen. Die Potenzial-bestimmenden Salzkonzentrationen der Referenzelektroden unterscheiden sich bevorzugt um einen Faktor von mindestens 2, mehr bevorzugt um einen Faktor von mindestens 5 und am meisten bevorzugt um einen Faktor von mindestens 10. Die Potenzialbestimmende Salzkonzentration kann sich bevorzugt um einen Faktor von bis zu 1000, mehr bevorzugt um einen Faktor bis zu 100 unterscheiden. In einer weiteren bevorzugten Ausführungsform weisen die Referenzelektrolyte der Referenzelektroden im Wesentlichen die gleiche Salzkonzentration auf. Dies bedeutet insbesondere, dass die Salzkonzentration im Referenzelektrolyt 1 gleich der Salzkonzentration im Referenzelektrolyt $2 \pm 20$ %, mehr bevorzugt $\pm 10$ % ist. In einer besonders bevorzugten Ausführungsform weisen die Referenzelektrolyte jeweils die gleiche Salzkonzentration auf. Besonders bevorzugt sind nicht nur die Salzkonzentrationen sondern auch die in den Referenzelektrolyten vorliegenden Salze im Wesentlichen gleich.

Als Ableitelemente der Referenzelektroden sind bevorzugt Silber/Silberchlorid-Elemente vorgesehen. Andere Ableitelemente, wie etwa Quecksilber/Kalomel, Thalliumamalgam/Thalliumchlorid oder weitere Silberverbindungen sind weniger gebräuchlich, können aber ebenfalls eingesetzt werden. Weitere Ableitelemente, wie etwa ein ionenselektives Element z.B. für Kalium oder für Chlorid, können ebenfalls eingesetzt werden.

Erfindungsgemäß besonders bevorzugt werden Referenzelektroden eingesetzt, welche von der Elektrochemie identische oder ähnliche Arbeitssysteme sind.

Während es erfindungsgemäß möglich ist, dass die Referenzelektrolyte beliebige Salze umfassen, enthalten sie bevorzugt Kaliumchlorid. Die Referenzelektrolyte können dabei aus verschiedenen konzentrierten Lösungen von Kaliumchlorid bestehen oder aus derselben Kaliumchloridlösung, wobei in diesem Fall die Referenzelektrolyte jeweils die gleiche Salzkonzentration aufweisen. Bei den Kaliumchloridlösungen kann es sich um wasserhaltige Lösungen, insbesondere um Lösungen mit einem Wassergehalt von mindestens 20 Gew.-%, mehr bevorzugt 50 Gew.-% und besonders bevorzugt mindestens 70 Gew.-% handeln. Es ist aber auch möglich, als Lösungsmittel für den Elektrolyten organische Lösungsmittel, insbesondere Ethylenglykol, Glycerin oder/und Alkohole einzusetzen. Diese organischen Lösungsmittel können im Gemisch mit Wasser oder als praktisch wasserfreie (<5 Gew.-% Wasser, bevorzugt < 1 Gew.-% Wasser) Systeme verwendet werden.

Weiterhin ist es erfindungsgemäß möglich, dass die Referenzelektrolyte zusätzlich festes Salz, insbesondere festes Kaliumchlorid umfassen.

Erfindungsgemäß ist eine Referenzelektrode in einer anderen Referenzelektrode integriert. Die beiden Referenzelektroden sind damit elektrolytisch in Serie geschaltet. Entsprechend weist eine solche erfindungsgemäße Anordnung nur einen Flüssigkeitsübergang, beispielsweise ein Diaphragma, zum Messgut auf. Auf diese Weise ist es möglich, eine stabile Referenzelektrode bereitzustellen. Die innere, stabile Referenzelektrode ohne direkten Kontakt zum Messgut wird zur Messung, insbesondere zur pH-Messung eingesetzt. Die äußere Referenzelektrode, die mit der inneren, stabilen Referenzelektrode, und mit dem Messgut verbunden ist, dient dann zur Überwachung des Elektrolytgehaltes, insbesondere des Salzgehaltes, des äußeren Referenzelektrolyten. Durch die Messung der Salzkonzentration im Referenzelektrolyten 2 durch die Potenzialdifferenz zwischen Referenzelektroden 1 und 2 erfolgt eine Kontrolle der Referenzelektrode. Die Messung der Salzkonzentration des äußeren Referenzelektrolyten ist ein Maß für die Größe der Diffusionspotenziale bzw. der Messfehler am Flüssigkeitsübergang zum Messmedium. Gleichzeitig ist die Messung der Salzkonzentration ein Maß der Stabilität der Referenzelektrode, welches auch zur qualitativen und/oder quantitativen Korrektur der Messergebnisse herangezogen werden kann.

Die beiden Referenzelektroden sind so angeordnet, dass die Referenzverbindung der einen Referenzelektrode mit dem Referenzelektrolyten der anderen Referenzelektrode elektrolytisch verbunden ist.

In einer besonders bevorzugten Ausführungsform der Erfindung ist die Referenzelektrode 1 sehr stabil und weist einen hohen Wert des Produkts V * R auf. Die Referenzelektrode 1 wird zur Bestimmung des pH-Werts der Messlösung eingesetzt. Die Referenzelektrode 2 weist einen tieferen Wert von V * R auf. Die Salzkonzentrationen des Referenzelektrolyten der pH-Elektrode und der Referenzelektrode 2 sind bevorzugt sehr ähnlich. Im Extremfall besteht die Referenzelektrode 2 lediglich aus einem chlorierten Silberdraht. In dieser Ausführungsform sind die Salzkonzentrationen des Referenzelektrolyten 1 und des Referenzelektrolyten 2 identisch. Ein zusätzlicher Referenzelektrolyt oder Brückenelektrolyt ist nicht erforderlich.

Die Referenzelektrode 2 ermöglicht die Bestimmung der Salzkonzentration des Referenzelektrolyten 2. Diese lässt sich aus dem Potenzialunterschied dE zwischen den Referenzelektroden 1 und 2 berechnen. Es gilt folgende Formel bei Raumtemperatur:

$$c_2 = c_1 \, 10^{(-dE/60)}$$

wobei:

$c_1$ = Elektrolytkonzentration der Referenzelektrode 1, bevorzugt 3 M KCl
$c_2$ = Elektrolytkonzentration der Referenzelektrode 2
$dE$ = Potenzialdifferenz in mV

Gegenstand der Erfindung ist auch ein Teilelement, umfassend zwei Referenzelektroden mit unterschiedlicher Potenzialstabilität, wie oben beschrieben.

Die Erfindung betrifft weiterhin ein Verfahren zur Überwachung oder/und Auswertung eines elektrochemischen Messsystems, insbesondere einer potenziometrischen Messkette, welches dadurch gekennzeichnet ist, dass die Potenzialdifferenz von mindestens zwei Referenzelektroden ausgewertet wird, die jeweils eine unterschiedliche Potenzialstabilität aufweisen.

Die Erfindung betrifft somit auch ein Verfahren zur elektrochemischen Messtechnik, wie der Erfassung des pH-Werts, das eine wartungsfreie Messung erlaubt. Das erfindungsgemäße Messverfahren arbeitet mit 2 Referenzelektroden, die eine unterschiedliche Potenzialstabilität aufweisen. Dadurch kann die Salzkonzentration des Referenzelektrolyten kontinuierlich überwacht werden. Bei der Unterschreitung einer festgelegten Salzkonzentration kann mittels geeigneter Auswertung automatisch der Messwert korrigiert und/oder der Anwender aufgefordert werden, den Sensor zu wechseln. Dadurch werden Messfehler vermieden, die z.B. aufgrund großer Diffusionspotenziale, und/oder Nullpunkt-, und/oder Isothermenschnittpunkt-Verschiebungen entstehen.

Mit dem erfindungsgemäßen Verfahren können insbesondere Erkenntnisse über die Potenzialverschiebung, und insbesondere Potenzialdifferenzen durch Salzkonzentrationsänderungen in den Referenzelektrolyten erhalten werden. Bei Erreichen eines vorbestimmten Grenzwertes für die Potenzialdifferenzänderung kann eine Meldung ausgelöst werden oder es kann die erkannte Potenzialänderung zur Messwertkorrektur herangezogen werden. Auf diese Weise wird der Anwender auf mögliche Messwertfehler hingewiesen bzw. es können Messwertfehler vom System erkannt und korrigiert werden.

Um eine zuverlässige Überwachung zu gewährleisten wird die Potenzialdifferenz zwischen den beiden Referenzelektroden zumindest periodisch und bevorzugt kontinuierlich ausgewertet. Die Auswertung der Potenzialdifferenz kann dabei im elektrochemischen Messsystem, beispielsweise einem Sensor vorgenommen werden oder in einer räumlich davon getrennten Vorrichtung. Für den Fall, dass das Erreichen einer bestimmten Potenzialdifferenz eine Meldung zur Folge hat, kann der Meldungsanzeiger direkt im Sensor integriert sein.

Die Erfindung wird durch die beigefügten Figuren und die nachfolgenden Beispiele weiter erläutert.

Die **Figur 1** veranschaulicht den Potenzialverlauf der zwei unterschiedlichen Referenzelektroden 1 und 2, wobei $V_1 * R_1$ 20 mal grösser ist als $V_2 * R_2$. Die Referenzelektrode 1 ist nahezu stabil und wird zur pH-Messung eingesetzt. Die Referenzelektrode 2 driftet stärker und wird zur Bestimmung der Salzkonzentration des Elektrolyten eingesetzt.

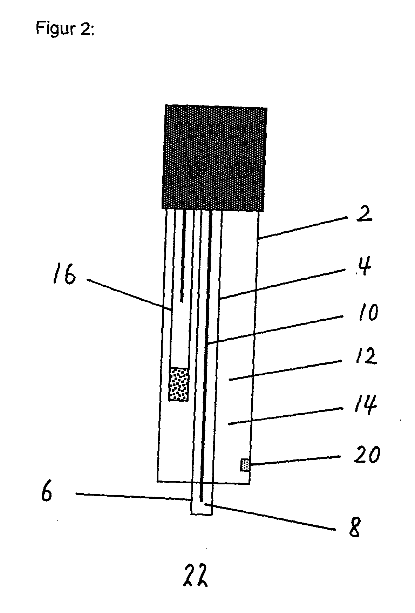

**Figur 2** zeigt den Schnitt einer üblichen Einstabmesskette, wie sie zur Messung des pH-Werts eingesetzt wird. Das äußere Schaftrohr 2 aus Glas oder Kunststoff umschließt das Innenrohr 4. Das Innenrohr und das Schaftrohr sind unten und oben zusammengeschmolzen oder zusammen verklebt. An das Innenrohr 4 wird vorne eine pH-selektive Glasmembran 6 angeschmolzen. Zur Potenzialableitung dient der Innenpuffer 8 und die Ableitung 10, welche meist aus einem Silberdraht besteht, der mit Silberchlorid beschichtet ist.

Die Kammer 12 ist konzentrisch um das Innenrohr 4 angeordnet. Sie enthält den Referenzelektrolyten 14, meist eine 3 molare Lösung von Kaliumchlorid. Die Referenzelektrode 16 in der Kammer 12 ist ebenfalls ein Silber/Silberchlorid-Element in Form einer Patrone oder in Form eines beschichteten Silberdrahtes. Patronen werden eingesetzt, falls die Messtemperatur 60 °C übersteigt. Die Einstabmesskette ist oben abgeschlossen mit einem Elektrodensteckkopf 18. Alternativ kann der Steckkopf durch einen Fixkabelanschluss ersetzt werden.

Die Flüssigkeitsverbindung 20 ermöglicht den elektrolytischen Kontakt zwischen dem Referenzelektrolyten 14 und dem Messmedium 22. Die Flüssigkeitsverbindung 20 besteht aus einem Diaphragma oder einem Loch bei Sensoren mit Polymerelektrolyt.

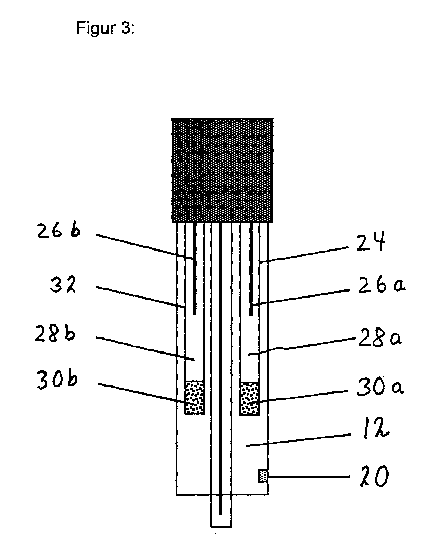

Die **Figur 3** zeigt eine pH-Einstabmesskette gemäß vorliegender Erfindung. Im Unterschied zur Figur 2 sind im Raum 12 zwei Referenzelektroden angeordnet. Die Referenzelektrode 1 (stabile Referenzelektrode) (24) enthält ein Silber/Silberchlorid Ableitelement 26a und den Elektrolyten 28a mit Elektrolytvolumen $V_1$. Ein poröser Stopfen 30a mit Widerstand $R_1$ dichtet die Referenzelektrode 24 ab. Die Referenzelektrode 2 (32) ist analog aufgebaut mit einem Ableitelement 26b, einem Elektrolyten 28b mit einem Volumen $V_2$ und einem porösen Stopfen 30b mit Widerstand $R_2$. Bei der Referenzelektrode 2 handelt es sich insbesondere um eine Elektrode zur Bestimmung des Salzgehaltes (Salzelektrode), z.B. des $Cl^-$-Gehaltes im Referenzelektrolyten 1. In einer besonders bevorzugten Ausführungsform ist der poröse Stopfen 30a sehr hochohmig und der poröse Stopfen 30b niederohmig. Die Messkette verläuft dann vom Messmedium über eine Flüssigkeitsverbindung 20, beispielsweise ein Diaphragma, zum Elektrolyten 12 (beispielsweise Brückenelektrolyt) zur stabilen Referenzelektrode 1 (24). Die Referenzelektrode 2 (32) dient zur Kontrolle. Die Salzkonzentrationsdifferenz zwischen dem Elektrolyten 12 und 28b ist bevorzugt sehr klein oder gleich Null (d.h. es werden identische Elektrolyte verwendet), während die Salzkonzentrationsdifferenz zwischen dem Elektrolyten 28a und 12 sehr unterschiedlich sein kann.

Falls die Referenzelektrode 2 lediglich aus einem Ag/AgCl Draht besteht, gilt für $V_2$ das Elektrolytvolumen des Raums 12. Als Widerstand $R_2$ muss der Widerstand der Flüssigkeitsverbindung 20 eingesetzt werden. Diese Ausführungsform, in der die Referenzelektrode 2 lediglich aus einem Ableitelement, z.B. Silberdraht, besteht, ist erfindungsgemäß besonders bevorzugt. In dieser Ausführungsform ist kein Brückenelektrolyt vorhanden oder erforderlich.

Die Ausführungsform ohne zusätzlichen Elektrolyten 28b kommt insbesondere bei Temperaturen ≤60 °C zur Anwendung, während Anordnungen mit einem Elektrolyten 28b vor allem bei höheren Temperaturen > 60 °C zur Anwendung kommen.

Bei einer Anordnung, wie sie in Figur 3 dargestellt ist, wird der pH-wert gemessen zwischen Messelektrode und stabiler Referenzelektrode 1 (24 mit Ableitelement 26a) und der Salzgehalt des äußeren Referenzelektrolyten 2 (12) wird gemessen zwischen stabiler Referenzelektrode 1 (24 mit Ableitelement 26a) und Referenzelektrode 2 (32 mit Ableitelement 26b). Die Referenzelektroden sind also in Serie geschaltet.

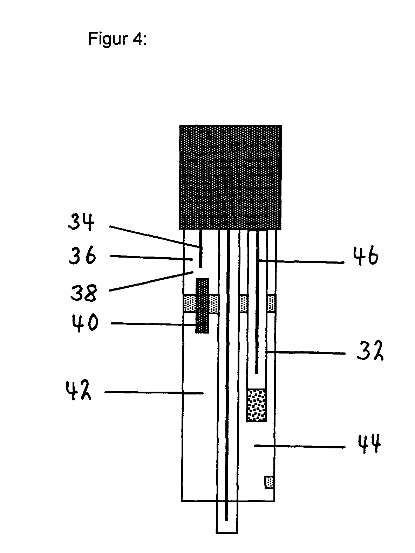

Die **Figur 4** zeigt einen weiteren Aufbau der erfindungsgemässen Elektrode. Das Ableitelement 34 der Referenzelektrode 1 ist in einer oberen Kammer 36 angeordnet, die den Referenzelektrolyten 38 mit einem Volumen $V_1$ enthält. Der poröse Stopfen 40 mit Widerstand $R_1$ dient zur elektrolytischen Verbindung zur unteren Kammer 42, die den Elektrolyten 44 mit dem Volumen $V_2$ aufnimmt. Das Ableitelement 46 der Referenzelektrode 2 (32) wird isoliert durch die obere Kammer 36 geführt.

**Figur 5** zeigt eine pH-Einstabmesskette gemäß der Erfindung. Die serielle Anordnung der beiden Referenzelektroden ist bei dieser einfachen Anordnung besonders deutlich ersichtlich.

Die Referenzelektrode 1 ist die stabile Referenzelektrode und wird z.B. zur Bestimmung des pH-Wertes eingesetzt. Die Referenzelektrode 1 besteht aus der oberen Kammer 36, dem Referenzelektrolyten 38 mit dem Volumen V1 und dem Ableitelement 34. Die Referenzelektrode 1 ist elektrolytisch verbunden mit der unteren Kammer 42 über einen porösen Stopfen 40. Dieser Stopfen kann auch durch eine Kapillare ersetzt werden. Der Widerstand R1 der Flüssigkeitsverbindung 40 ist hoch, um eine gute Stabilität der Referenzelektrode 1 zu erhalten.

Die untere in Serie geschaltete Referenzelektrode 2 besteht aus der Kammer 42, die das Ableitelement 46 und den äußeren Referenzelektrolyten 44 mit Volumen V2 enthält. Die elektrolytische Verbindung zwischen dem äußeren Referenzraum 44 und dem Messmedium 22 wird durch die äußere Flüssigkeitsverbindung 20 mit Widerstand R2 gewährleistet. Das Ableitelement 46 wird mittels einer Isolation 48 elektrisch isoliert durch die obere Kammer 36 geführt.

Die Potenzialdsifferenz zwischen der stabilen Referenzelektrode 1 und der Referenzelektrode 2 ermöglicht die Berechnung des Salzgehaltes des äußeren Referenzelektrolyten 44 und daher die Verfolgung des Alterungsprozesses.

Bei genau definierten Potenzialstabilitäten der beiden Referenzelektroden kann aus der Potenzialdifferenz nicht nur der Alterungsprozess, sondern auch die geringe Potenzialverschiebung der Referenzelektrode 1 berechnet werden (vgl. Figur 1). Dies ermöglicht eine automatische Korrektur des Elektrodennullpunktes.

**Ausführungsbeispiele**

**Beispiel 1:**

Eine pH-Einstabmesskette gemäß vorliegender Erfindung wird aufgebaut nach Figur 3. Der Schaft besteht aus einem Glasrohr mit 12 mm Durchmesser. Die Referenzelektrode 1 besteht aus einem Glasrohr mit Durchmesser 3 mm und einer Länge von 60 mm. Der poröse Stopfen besteht aus einem dünnen eingeschmolzenen Diaphragma aus Keramik, das auf einer Länge von 20 mm eingeschmolzen ist. Die Referenzelektrode 1 enthält einen chlorierten Silberdraht und den Elektrolyten 3M KCl. $V_1$ = 0.2 ml, $R_1$ = 50 kOhm $V_1 * R_1$ = 10 ml.kOhm.

Die Referenzelektrode 2 besteht aus einem Ag/AgCl Draht, der in den Polymerelektrolyten mit $V_2$ = 6 ml eintaucht. Der Widerstand der offenen Flüssigkeitsverbindung beträgt 0.15 kOhm $V_2 * R_2$ = 0.9 ml.kOhm

Erlaubt man eine Erniedrigung der KCl-Konzentration im Polymerelektrolyten von 3M auf 0.3M KCl, ist dies bei Raumtemperatur nach 5.4 Monaten erreicht. In dieser Zeit hat sich das Potenzial der Referenzelektrode 1 um lediglich 0.06 pH-Einheiten verschoben, was für die meisten Anwendungen nicht relevant ist. Bei 0.3M KCl beträgt der Potenzialunterschiede zwischen den beiden Referenzelektroden 50 mV. Falls der Grenzwert im Gerät auf 50 mV eingestellt ist, kann die pH-Messung folglich ohne Wartung während mehr als 5 Monaten durchgeführt werden, ohne eine Rekalibration durchführen zu müssen. Während dieser Zeitspanne bleibt die Salzkonzentration genügend hoch, sodass keine nennenswerten Fehler durch Diffusionspotenziale auftreten. Die Überschreitung des Grenzwertes zeigt dem Benutzer an, dass er den Sensor ersetzen soll.

Erlaubt man eine Erniedrigung der KCl-Konzentration im Polymerelektrolyten von 3M auf 0.03M KCl, ist dies bei Raumtemperatur nach 11 Monaten erreicht. In dieser Zeit hat sich das Potenzial der Referenzelektrode 1 um lediglich 0.11 pH-Einheiten verschoben, was in vielen Anwendungen noch tolerierbar ist. In diesem Fall ist eine pH-Kontrolle ohne Nachkalibration während nahezu einem Jahr realisierbar.

Enthält der Polymerelektrolyt zusätzlich 1 g KCl, bleibt die pH-Elektrode um weitere 0.15 * 25 = 3.7 Monate stabil.

**Beispiel 2:**

Eine Referenzkontrolle gemäß vorliegender Erfindung wird aufgebaut nach Figur 5. Die obere Kammer der Referenzelektrode enthält 1 ml 3M KCl Lösung und eine Ag/AgCl Ableitung in Form eines Drahtes oder einer Patrone. Die obere Kammer wird mit einem Silikonring abgedichtet. In diesem Silikonring ist eine Glaskapillare der Länge 10 mm mit einem Innendurchmesser von 0.1 mm eingebaut. Die Glaskapillare ist mit einem Polymerelektrolyt gefüllt, der eine Konvektion verhindert. Der Widerstand dieser Kapillare beträgt 38 kOhm.

Die Referenzelektrode 2 besteht aus einem Ag/AgCl Draht, der in den Elektrolyten mit $V_2$ = 5 ml eintaucht. Er wird isoliert durch die obere Kammer geführt. Die Flüssigkeitsverbindung besteht aus einem Diaphragma aus z.B. Keramik mit 0.5 kOhm Eine solche Elektrode wäre geeignet zur Kontrolle des pH-Wertes von sauberem Wasser, wie etwa Trinkwasser.

Referenzelektrode 1:     $V_1 * R_1$ = 38 ml.kOhm
Referenzelektrode 2:     $V_2 * R_2$ = 2.5 ml.kOhm

Erlaubt man eine Erniedrigung der KCl Konzentration im Polymerelektrolyten von 3M auf 0.3M KCl, ist dies bei Raumtemperatur nach 15 Monaten erreicht. In dieser Zeit hat sich das Potenzial der Referenzelektrode 1 um weniger als 0.05 pH-Einheiten verschoben. Eine pH-Kontrolle ohne Nachkalibration während mehr als einem Jahr ist also realisierbar.

**Patentansprüche**

1.  Elektrochemisches Messsystem, umfassend eine Messelektrode und mindestens zwei Referenzelektroden, die jeweils eine unterschiedliche Potenzialstabilität aufweisen.

2.  Elektrochemisches Messsystem nach Anspruch 1,
    **dadurch gekennzeichnet,**
    **dass** es mindestens zwei niederohmige Referenzelektroden umfasst.

3.  Elektrochmemisches Messsystem nach Anspruch 1 oder 2,
    **dadurch gekennzeichnet,**
    **dass** die Potenzialstabilität der zwei Referenzelektroden sich um einen Faktor von mindestens 2 unterscheidet.

4.  Elektrochemisches Messsystem nach einem der vorhergehenden Ansprüche,
    **dadurch gekennzeichnet,**
    **dass** die Referenzelektroden jeweils ein unterschiedlich großes Elektrolytvolumen aufweisen.

5. Elektrochemisches Messsystem nach einem der vorhergehenden Ansprüche,
**dadurch gekennzeichnet,**
**dass** sich die Elektrolytvolumen der Referenzelektroden um einen Faktor von 2 bis 1000 unterscheiden.

6. Elektrochemisches Messsystem nach einem der vorhergehenden Ansprüche,
**dadurch gekennzeichnet,**
**dass** die Referenzelektroden jeweils unterschiedlich große Widerstände aufweisen.

7. Elektrochemisches Messsystem nach einem der vorhergehenden Ansprüche,
**dadurch gekennzeichnet,**
**dass** sich der Widerstand der Referenzelektroden um einen Faktor von 2 bis 1000 unterscheidet.

8. Elektrochemisches Messsystem nach einem der vorhergehenden Ansprüche,
**dadurch gekennzeichnet,**
**dass** die Referenzelektrolyte der Referenzelektroden jeweils eine unterschiedliche Salzkonzentration aufweisen.

9. Elektrochemisches Messsystem nach einem der vorhergehenden Ansprüche,
**dadurch gekennzeichnet,**
**dass** die Referenzelektrolyte der Referenzelektroden im Wesentlichen die gleiche Salzkonzentration aufweisen.

10. Elektrochemisches Messsystem nach einem der vorhergehenden Ansprüche,
**dadurch gekennzeichnet,**
**dass** das Ableitelement von mindestens einer Referenzelektrode aus Silber und Silberchlorid oder aus einer anderen Elektrode 2. Art besteht.

11. Elektrochemisches Messsystem nach einem der vorhergehenden Ansprüche,
**dadurch gekennzeichnet,**
**dass** der Referenzelektrolyt von mindestens einer Referenzelektrode eine Lösung von Kaliumchlorid umfasst.

12. Elektrochemisches Messsystem nach Anspruch 11,
**dadurch gekennzeichnet,**
**dass** der Referenzelektrolyt in mindestens einer der Referenzelektroden eine wasserhaltige Lösung von Kaliumchlorid ist.

13. Elektrochemisches Messsystem nach einem der Ansprüche 1 bis 12,
**dadurch gekennzeichnet,**
**dass** als Lösungsmittel für den Referenzelektrolyten von mindestens einer Referenzelektrode Ethylenglykol, Glycerin, Alkohole oder ein Gemisch davon eingesetzt ist.

14. Elektrochemisches Messsystem nach einem der vorhergehenden Ansprüche,
**dadurch gekennzeichnet,**
**dass** der Referenzelektrolyt von mindestens einer der Referenzelektroden festes Kaliumchlorid umfasst.

15. Elektrochemisches Messsystem nach einem der vorhergehenden Ansprüche,
**dadurch gekennzeichnet,**
**dass** die Referenzverbindung der einen Referenzelektrode mit dem Referenzelektrolyten der anderen Referenzelektrode elektrolytisch verbunden ist.

16. Elektrochemisches Messsystem nach einem der vorhergehenden Ansprüche,
**dadurch gekennzeichnet,**
**dass** eine Referenzelektrode zur Messung oder/und Überwachung der Salzkonzentration eines Referenzelektrolyten dient.

17. Verfahren zur Überwachung oder/und Auswertung eines elektrochemischen Messsystems,
**dadurch gekennzeichnet,**
**dass** die Potenzialdifferenz von mindestens zwei Referenzelektroden ausgewertet wird, die eine unterschiedliche Potenzialstabilität aufweisen.

**18.** Verfahren nach Anspruch 17,
**dadurch gekennzeichnet,**
**dass** eine Potenzialverschiebung durch Salzkonzentrationsänderungen in den Referenzelektrolyten gemessen wird.

**19.** Verfahren nach Anspruch 17 oder 18,
**dadurch gekennzeichnet,**
**dass** bei Erreichen eines Grenzwertes für die Potenzialdifferenz eine Meldung ausgelöst wird oder/und die gemessene Potenzialdifferenzänderung zur Messwertkorrektur verwendet wird.

**20.** Verfahren nach einem der Ansprüche 17 bis 19,
**dadurch gekennzeichnet,**
**dass** das elektrochemische Messsystem zur potentiometrischen Messung von chemischen Parametern eines Messmediums, insbesondere des pH-Werts eingesetzt wird.

**21.** Verfahren nach einem der Ansprüche 17 bis 20,
**dadurch gekennzeichnet,**
**dass** die Potenzialdifferenz zwischen zwei Referenzelektroden zumindest periodisch ausgewertet wird.

**22.** Verfahren nach einem der Ansprüche 17 bis 21,
**dadurch gekennzeichnet,**
**dass** die Auswertung der Potenzialdifferenz zumindest teilweise im Sensor vorgenommen wird.

**23.** Verfahren nach einem der Ansprüche 17 bis 22,
**dadurch gekennzeichnet,**
**dass** die Auswertung der Potenzialdifferenz zumindest teilweise räumlich vom Sensor getrennt vorgenommen wird.

**24.** Verfahren nach einem der Ansprüche 17 bis 23,
**dadurch gekennzeichnet,**
**dass** ein Meldungsanzeiger direkt im Sensor integriert wird.

Figur 1:

Potential

Referenzelektrode 2

Referenzelektrode 1

Zeit

Figur 2:

2

16

4

10

12

14

20

6

8

22

Figur 3:

26 b
24
32
26 a
28 b
28 a
30 b
30 a
12
20

Figur 4:

Figur 5 :

**Europäisches Patentamt**

**EUROPÄISCHER RECHERCHENBERICHT**

Nummer der Anmeldung

EP 01 12 8253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 196 26 277 A (SCHOTT GERAETE) 2. Januar 1998 (1998-01-02) * das ganze Dokument * | 1-24 | G01N27/403 G01N27/416 |
| D,X | DE 35 10 868 A (CONDUCTA MESS & REGELTECH) 10. Oktober 1985 (1985-10-10) * Seite 9, Zeile 8 - Seite 10, Zeile 22 * * Seite 13, Zeile 8 - Zeile 26 * * Seite 16, Zeile 16 - Seite 17, Zeile 23 * * Seite 19, Zeile 1 - Seite 20, Zeile 5; Abbildungen 1-3 * | 1-24 | |
| X | US 5 766 432 A (HARRINGTON ROBERT ET AL) 16. Juni 1998 (1998-06-16) * Spalte 5, Zeile 34 - Spalte 8, Zeile 17; Abbildungen 2,3 * | 1,2,15, 17,19-24 | |
| X | US 4 461 998 A (KATER JOHN A R) 24. Juli 1984 (1984-07-24) * Spalte 4, Zeile 57 - Spalte 6, Zeile 54; Abbildung 4 * | 1,4,6,8, 10,15 | |

**RECHERCHIERTE SACHGEBIETE (Int.Cl.7)**

G01N

Der vorliegende Recherchenbericht wurde für alle Patentansprüche erstellt

| Recherchenort | Abschlußdatum der Recherche | Prüfer |
|---|---|---|
| MÜNCHEN | 4. Februar 2002 | Strohmayer, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie,übereinstimmendes Dokument

EPO FORM 1503 03.82 (P04C03)

**EP 1 219 959 A1**

## ANHANG ZUM EUROPÄISCHEN RECHERCHENBERICHT
## ÜBER DIE EUROPÄISCHE PATENTANMELDUNG NR.

EP 01 12 8253

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 19626277 | A | 02-01-1998 | DE | 19626277 A1 | 02-01-1998 |
| | | | CH | 691933 A5 | 30-11-2001 |
| DE 3510868 | A | 10-10-1985 | DE | 3510868 A1 | 10-10-1985 |
| | | | EP | 0156376 A2 | 02-10-1985 |
| | | | US | 4686011 A | 11-08-1987 |
| US 5766432 | A | 16-06-1998 | AU | 2443297 A | 07-11-1997 |
| | | | WO | 9738625 A1 | 23-10-1997 |
| US 4461998 | A | 24-07-1984 | KEINE | | |